# EUROPEAN PATENT APPLICATION

(11) **EP 0 846 549 A2**
(43) Date of publication of application: **10.06.1998**
(21) Application number: 97309844.5
(22) Date of filing: 05.12.1997
(51) Int. Cl.: B29C 67/00, B29C 41/36, B29C 41/46

(54) **Forming three-dimensional models**

(30) Priority: 05.12.1996 SG 9611549
(71) Applicant: Kinergy Pte Ltd., Singapore 569871 (SG)
(72) Inventor: Lim Kuak Choi, Leslie, Techplace II, 03-03 569871 Singapore (SG); Wang, Yungan, Techplace II, 03-03 569871 Singapore (SG)
(74) Representative: Molyneaux, Martyn William

(57) **Abstract**

An apparatus for forming a three-dimensional object has a profile cutter (2) for cutting shapes in sheet material (1), a sheet material feeder (8), a computer (4) for providing instructions to the profile cutter and a laminator (5). The laminator includes a roller (6) and a heating component (7) which pass over the sheet material twice during each laminating step. In another aspect of the invention the computer analyses the shapes of cuts to be made, determines which areas of the sheet material are to form a part of the object and which are to be discarded so that each cut has a retain side and a discard side, wherein the computer compensates for the width of the profile cutter by instructing the profile cutter to cut paths which are slightly on the discard side.

## Description

This invention relates to the formation of three-dimensional models. It relates particularly but not exclusively to apparatus for forming three-dimensional models or prototypes as a computer output.

### Background of the Invention

As a result of consumer demand and the continual development of science and technology, competition amongst companies in developing new products is intensifying while the life span of individual products is decreasing. Today designers are asked not only to design new products quickly according to market requirements, but also to fabricate samples of products as soon as possible in order to test their performance, search the opinions of customers, modify design and finally launch new products into the market. Traditional methods of fabricating samples require the use of various different types of machining equipment, tools, dyes and moulds. The prototyping process is slow, taking several weeks or even months, and the cost is high. In order to address this problem, rapid prototyping technology has become more common in recent years.

A rapid prototyping machine requires the designer to construct a model of a three-dimensional object on a computer. The computer then divides the notional object into a finite number of cross-sectional slices. The computer then provides information concerning the profile of each cross-sectional slice to the rapid prototyping machine, which produces the profile and builds the profiles layer by layer to form the 3-dimensional object. A highly accurate sample of the object can thus be obtained within a few hours. This not only saves time and money, but also allows modification of product design to be much more straight forward.

Rapid prototyping technology can be used for designing and fabrication of products with complicated shapes. Some applications of rapid prototyping are:
1. Injection mould for producing plastic parts.
2. Investment casting mould for precision casting.

One type of rapid prototyping machine presently available is known as stereolithography apparatus (SLA), produced by 3D Systems Inc. and others. An example is shown in International Patent Publication WO95/29053. SLA uses an ultraviolet laser beam to scan light sensitive resin in liquid state. Exposure to the laser beam causes the resin to solidify layer by layer to form the solid sample The method is used to fabricate small and thin plastic samples, but has the following disadvantages:
1. Chemical and physical changes during solidification may cause the sample to warp.
2. The ultraviolet laser and the light sensitive resin are expensive, and the life of the laser tube is only 1000 to 2000 hours.
3. Speed of formation is low because the laser beam has to scan the whole cross-sectional area during the solidification process.
4. A support structure is required to avoid shifting of the solidified layers.

Another currently available type of rapid prototyping machine is known as laminated object manufacturing (LOM), produced by Helisys Inc. An example of this is described in International Patent Publication WO96/11117. LOM uses a heat pressing roller and a CO₂ laser beam to laminate and cut layers of a sheet material or a powder based material, gradually forming the sample. This method is used to make medium to large paper sized samples, but has the following disadvantages:
1. The cutting speed and accuracy of the sample is low because the laser cutting head is driven by a common plotter.
2. Heating and laminating speed is low because both operations are performed by one roller or by a laser. Transfer of heat from the roller to the layer being laminated is inefficient, and heating by a laser requires the laser to scan the whole surface being laminated.
3. Polishing of the sample and removal of excess sheet material is difficult with the sheet material typically used in the LOM process because there is often residual adhesive on the cut surfaces.
4. A high precision sample cannot be obtained because there is no method of compensating for the width of the laser beam as it cuts a profile.

Another sort of prototyping machine is known as fused deposition modelling (FDM), built by Stratasys Co. Limited. FDM uses heated plastic wire to deposit and form each layer of the sample. Plastic samples can be produced without using a laser. However, the forming speed is low because the whole area of every cross-section has to be deposited point by point.

Another type of presently available prototyping machine is known as selective laser sintering (SLS), produced by DTM Corporation and described in International Patent Publication WO92/08566. SLS uses a laser beam to scan and melt a plastic or metal powder to form each layer of a prototype. It can make small prototypes, but the forming speed is low.

### Objectives of the Invention

It is an object of the present invention to provide a system for forming three-dimensional models which overcomes at least some of the problems associated with the prior art.

### Summary of the Invention

According to one aspect of the present invention there is provided apparatus for forming a three-dimensional model from layers of a sheet material comprising:
(a) a profile cutter, for cutting shapes in the sheet material;
(b) a sheet material feeder, for positioning the sheet material prior to cutting by the profile cutter;
(c) a computer, providing instructions to the profile cutter concerning the shapes to be cut in the sheet material;
(d) a laminator, for laminating together successive layers of sheet material;
wherein the laminator includes a roller and a heating component and in operation the roller and heating component pass over the sheet material twice during each laminating step.

The heating component preferably comprises means for directing hot air against the sheet material. In operation, the roller passes over a layer of sheet material in one direction and returns in the opposition direction, preceded in the return motion by the heating component which directs a blast of hot air against the sheet material, so that the sheet material is firmly adhered to lower layers of sheet material under the pressure of the roller.

It is further preferred that the roller itself be heated by means of a heating tube, thermocouple and temperature controller. Where the sheet material has a layer of adhesive material, the temperature of the roller can be set up according to the melting temperature of the adhesive, and kept constant.

It is preferred that the heating component comprise a heating tube, air source and set of air jets.

According to a second aspect of the invention, there is provided apparatus for forming a three-dimensional model from layers of a sheet material comprising:
(a) a profile cutter, for cutting shapes in the sheet material;
(b) a sheet material feeder, for positioning the sheet material prior to curling by the profile cutter;
(c) a computer, providing instructions to the profile cutter conceming the shapes to be cut in the sheet material;
(d) a laminator, for laminating together successive layers of sheet material;
wherein, prior to providing instructions to the profile cutter for any cutting operation, the computer analyses the shapes of cuts to be made, determines which areas of the sheet material are to form part of the model and which are to be discarded, so that each cut has a retain side and a discard side, and compensates for the width of the profile cutter by instructing the profile cutter to cut paths which are slightly on the discard side.

There are external and internal profiles for every cross-section. Before compensating for the cutting width of the laser beam, the system first determines whether the profile is external or internal. The system then automatically decides the compensation direction - towards the outside or inside.

The sheet material used with the apparatus of the invention may be any suitable sheet material including plastics, metal foils, papers and composites. A preferred type of sheet material is treated paper. An especially preferred type of paper consists of a paper base, an adhesive layer and additives. The weight of the paper is preferably between 50 and 100 grams per square metre. The paper type is preferably absorbent to allow the adhesive and additives to adhere to the paper. The adhesive and additives are preferably resin based with melting temperatures of between 100 and 250°C, or with such other melting temperatures as may be appropriate depending upon the uses to which the finished model or prototype is to be put. The resin preferably is a powder type resin, which is absorbed and solidified on the paper by means of a high voltage electric field and heating devices. The preferred thickness of the adhesive layer is about 10 micrometres. It is especially preferred that the additives include as a major component carbon, which has been found to improve the mechanical performance of the paper and the finished model or prototype. A preferred mix ratio of resin to adhesive is 9:1.

The profile cutter may be any suitable type of profile cutter. It is especially preferred that the profile cutter be a laser beam. In a preferred arrangement, there is provided a laser cutting head slidably located on a track, the track itself being slidably located on two linear guides which are orientated substantially perpendicular to the track. In this arrangement, the laser cutting head is driven along the track and the guides by a servo motor, causing the laser to cut paths on the sheet material corresponding with the desired shapes. In a further preferred aspect of this arrangement, the linear guides also serve as guides for the roller and heating component. In this arrangement the roller and heating component are driven by a stepper motor. Dual point (double slider) supports are provided for both guides.

The sheet material feeder may comprise any suitable apparatus suitable for positioning the sheet material prior to cutting by the profile cutter. It is preferred that the sheet material feeder incorporate means for moving away discarded sheet material after each cutting operation.

It is preferred that the paper be appropriately tensioned, simplifying the task of separating discarded paper from the shapes which form part of the desired model or prototype. In an especially preferred arrangement, rollers are provided in either side of the area in which construction of the model or prototype occurs, and sheet material is wound by means of these rollers off a material storage roller on one side onto a discarded material roller on the other side. In operation, a fresh portion of the sheet material is rolled into the working area, a lamination operation occurs followed by a cutting operation, then the sheet material is wound on, removing discarded material and forwarding a fresh area of sheet material ready for another lamination and cutting operation.

The invention will hereinafter be described in greater detail by reference to the attached drawings which show an example form of the invention. It is to be understood that the particularity of the drawings does not supersede the generality of the preceding description of the invention.

### Brief Description of the Drawings

Figure 1 is a schematic perspective view of an embodiment of the present invention.

Figure 2 is a cut away drawing of a unit comprising a roller and heating component according to an embodiment of the invention.

Figure 3 is a top view of a track and guides arrangement for a laser cutting head and a combined roller and heating component.

Figure 4 is a perspective view of a model or prototype before and after cutting operations, illustrating computer analysis of areas to be discarded and areas to be retained.

Figure 5 shows lengthwise and end cross-sectional views of an embodiment of a combined roller and heating component unit.

Figure 6 shows lengthwise views of the roller/heating component and laser cutting head track of Figure 3.

### Detailed Description of the Drawings

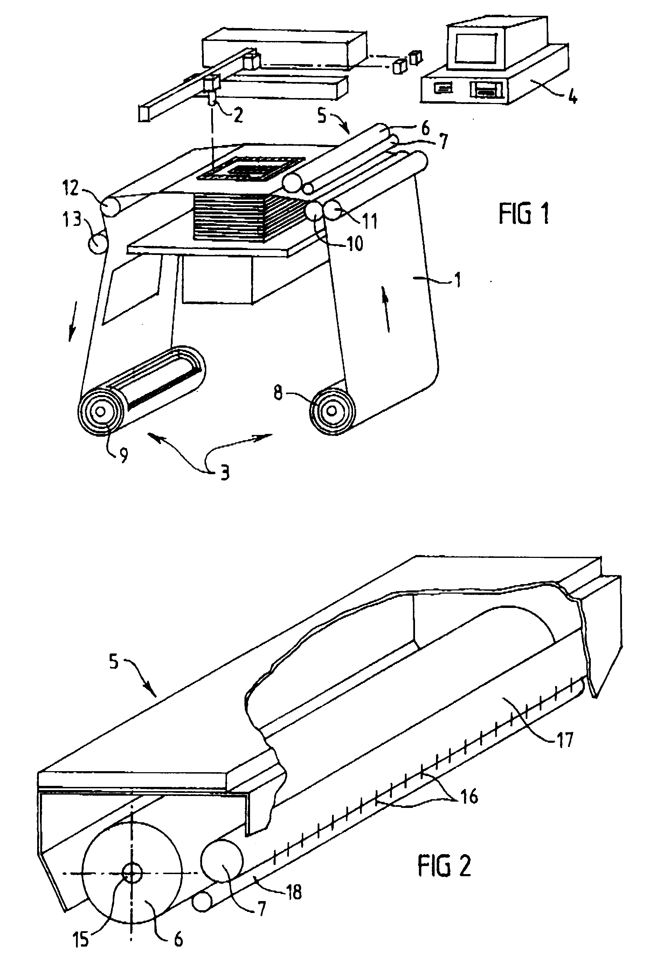

Referring firstly to Figure 1, the apparatus for forming a three-dimensional model from layers of sheet material 1 includes profile cutter 2 for cutting shapes in sheet material 1. Sheet material feeder 3 positions sheet material 1 prior to cutting by profile cutter 2. Computer 4 provides instructions to profile cutter 2 concerning the shapes to be cut in sheet material 1. Laminator 5 laminates together successive layers of sheet material 1. Laminator 5 includes roller 6 and heating component 7. In operation, roller 6 and heating component 7 pass over sheet material 1 twice during each laminating step.

It is preferred that sheet material feeder 3 incorporate means for tensioning sheet material 1, making it easier to separate discarded sheet material from sheet material which is to be retained as part of the three-dimensional model or prototype. In the system illustrated in Figure 1, sheet material feeder 3 incorporates material storage roll 8, discarded material roll 9, feed tension rollers 10 and 11, and discard sheet material tension rollers 12 and 13. In operation, a fresh section of sheet material 1 is wound onto the area over base block 14; the sheet material is then laminated to the existing layers of the three-dimensional model or prototype; profile cutter 2 then cuts from the laminated sheet material shapes corresponding with the next slice of the model to be formed; and discarded sheet material is then removed as rolls 8 and 9 are wound on and a fresh region of sheet material 1 is positioned over base block 14.

Figure 2 shows a preferred embodiment of laminator 5 in more detail. Laminator 5 incorporates heated roller 6 and heating component 7. During a lamination operation, laminator 5 in the configuration shown moves from right to left across the area of sheet material being laminated. The lamination process is a heat bonding process, which may involve welding or heat activation of an adhesive on the sheet material. As the laminator moves from right to left in the configuration shown, heated roller 6 first heats and presses sheet material 1 against existing layers of the model being formed. This results in a preliminary bond. Heating element 7 follows roller 6 across the sheet material, causing a more effective heating of the sheet material as laminator 5 returns to its original position, moving from left to right in the configuration shown, heating element 7 reheats sheet material 1, and roller 6 applies pressure to the sheet material, resulting in a more effective adhesion operation. It has been found that this configuration results in a much more satisfactory bond than that produced by a heated roller alone because of inefficiencies in heat transfer between a roller and the sheet material.

Further preferred features of laminator 5 are shown in Figure 2. Roller 6 incorporates internal heating tube 15, allowing roller 6 to be heated to a temperature appropriate for the adhesion operation. Heating element 7 is in the embodiment shown in the form of a hot blast pipe, incorporating a plurality of air jets 16 which direct heated air downwards against the surface of sheet material 1 during a lamination operation. Heating element 7 is connected to an air source 17. An additional heating tube 18 is provided.

Heating tube 15 is connected to a thermocouple and temperature controller, allowing adjustment of the roller temperature, which is typically kept constant during construction of any particular model, but which may vary depending upon the temperatures required for any particular welding or adhesion operation. Heating element 7 comprises heating tube 18, air source 17 and air jets 16. Radiation heat provided from heating tube 18 is ejected onto the surface of sheet material 1 in the form of an air blast.

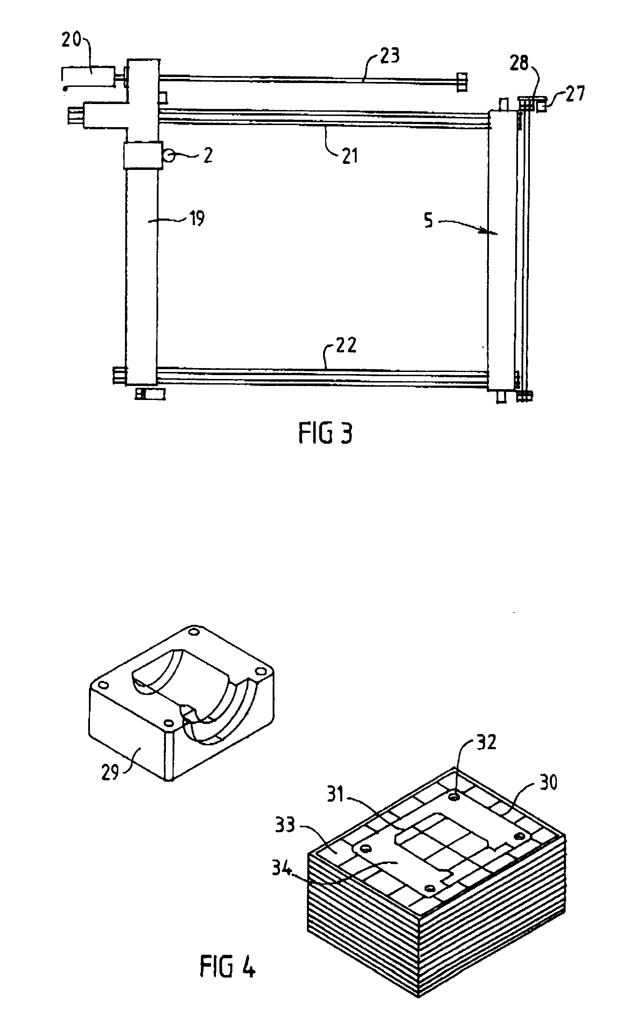

Figure 3 shows an arrangement for driving and positioning of profile cutter 2 and laminator 5. Profile cutter 2 preferably comprises a laser, which may be any laser suitable for cutting the sheet material. One suitable type of laser is a CO₂ laser.

Profile cutter 2 is located on track 19, moveable freely up and down track 19 powered by servo motor 20. Track 19 itself is moveable left and right in the configuration shown in Figure 3 along linear guides 21 and 22. By the combined operation of track 19, guides 21 and 22, servo motor 20 and precision ball screw 23, profile cutter 2 can be moved rapidly to any location in the area between linear guides 21 and 22. Track 19 moves along linear guides 21 and 22 by means of dual point sliders 23 and 24 (shown in Figure 6), which slide along linear guides 22 and 21 respectively.

In the preferred embodiment illustrated, laminator 5 also moves on the same linear guides 21 and 22 as are used by profile cutter track 19. Laminator 5 moves along linear guides 21 and 22 by means of dual point sliders 26 and 25 respectively (shown in Figure 6). Laminator 5 is driven by stepper motor 27 through timing belt 28.

When the apparatus shown in Figure 3 is operating, stepping motor 27 first moves laminator 5 from the right hand position shown across towards the left hand side, approaching profile cutter track 19. Laminator 5 is then driven back to the position shown in Figure 3. This completes the lamination operation. Thereafter, profile cutter track 19 is moved from the left most position shown in Figure 3 towards the laminator while profile cutter 2 moves up and down along track 19, causing profile cutter 2 to cut the desired shapes in the sheet material which is located in the area between linear guides 21 and 22. Track 19 then moves back to its left most position, a fresh portion of sheet material is placed in the area between linear guides 21 and 22, and the process in repeated.

The second aspect of the invention is best illustrated in Figure 4. The left most part of Figure 4 shows a model or prototype 29 which is to be created using the apparatus of the present invention. The right most part of Figure 4 shows a slice or layer which is to form part of the model or prototype. As can be seen, any particular layer of sheet material is comprised of discard portions 33 and retained portions 34, where retained portions 34 are to form part of the model or prototype, and discard portions 33 must be removed. If profile cutter 2 was infinitely narrow, computer 4 could simply instruct profile cutter 2 to cut along the outlines of the desired shapes before the discard portions 33 are removed. However, profile cutter 2 has a finite width, and this results in inaccuracies in the shape of retained portion 34 if the width of profile cutter 2 is not compensated for. External profiles 30 of retained portions 34 end up too small, whereas internal profiles 31 and holes 32 end up too large. To avoid this difficulty, the present invention compensates for the width of profile cutter 2 by moving the path of profile cutter 2 slightly towards the discard side of any cut. In order to determine which side of any cut is the discard side and which side is the retained side, the computer uses an "odd-even check" automatic recognition method. The computer searches the profiles from the edge of each cross-section to the centre, and records the number of cuts in sequence. The cuts with an odd number are identified as external cuts and cuts with an even number are identified as internal cuts. The system can therefore compensate for cutting width automatically according to this "odd-even check".

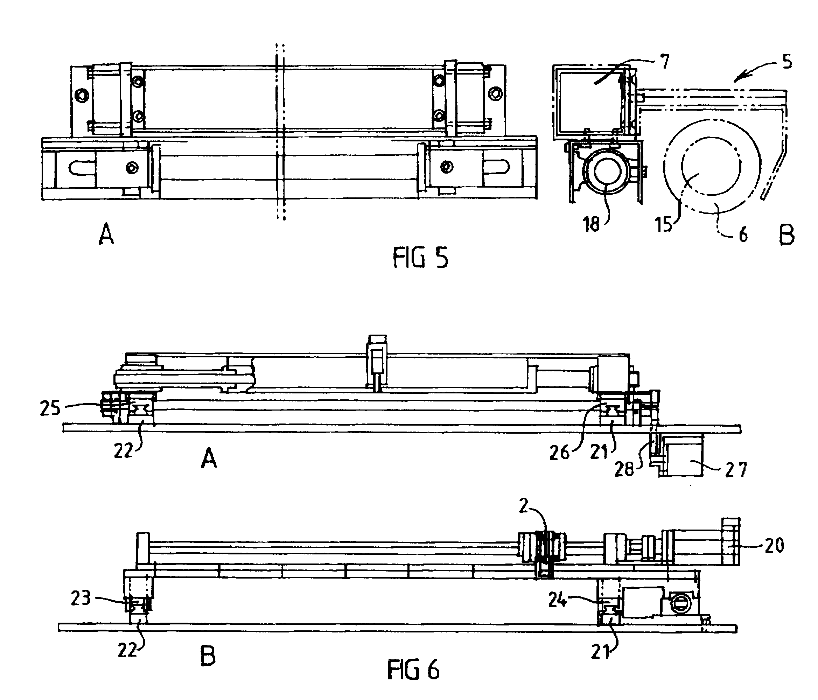

Figure 5 shows an alternative embodiment of the laminator shown in Figure 2. The right hand side of Figure 5 shows a cross-sectional view of laminator 5, taken from the opposite end to that shown in Figure 2. The same components are shown including roller 6 with its heating tube 15 and heating component 7 with its heating tube 18.

Sheet material 1 may be any suitable type of sheet material. Suitable sheet materials include plastic films, paper, fibre reinforced composites, and foils. The sheet material may be capable of bonding to similar sheet material in the presence of heat without any additional adhesive, or it may be coated with a heat activated adhesive. The adhesive may be present on sheet material 1 when it is stored on feed roll 8, or it may be applied to sheet material 1 after leaving feed roll 8 but before reaching base block 14.

The particular sheet material and adhesive (if any) chosen for use in constructing a model or prototype according to the invention may be selected according to any required characteristics of the finished prototype or model. By way of example, the prototype may be required to exhibit a particular resistance to moisture, pressure, heat, acid or radiation. The thickness of the sheet material may be selected to comply with the precision required in the dimensions of the finished model or prototype.

One preferred type of sheet material is treated paper with a weight of between 50 and 100 grams per square meter. The paper is of an absorbent type to allow adhesive and additives to adhere to the paper. The adhesives and additives are resin based with melting temperature in the range of 100 to 250°C according to the proposed usage of the sample. The resin comes in powder state and is absorbed and solidified on the paper using a high voltage electric field and heating. The thickness of the adhesive layer is about 10 micrometers. The major component of the additives is carbon. The mix ratio of resin and additives is 9:1. With this preferred type of paper, when the profile cutter is a laser beam, edges of the paper cut by the laser beam are carbonised. This results in a smooth hard outer shell on the model or prototype after the heating and cutting processes. The resultant prototypes are as hard as polywood, smooth to touch after they have been polished with sand paper, able to withstand temperatures of up to about 200°C, and capable of being machined (for example by lathe, mill, drill and grind). This process leaves no residual adhesive on the vertical sections of the sample, and it is therefore easy to remove discarded portions of sheet material without the need of any special tools. This especially important when producing samples with complex channels.

It has been found that the laminator incorporating a roller and a separate heating component produces significantly superior lamination to that produced by a heating roller alone. The mechanical performance of finished models and prototypes is significantly increased. Moreover, the speed of movement of the roller across the sheet material during a lamination operation can be increased to 80 to 100mm per second. Speed of forming models is therefore significantly increased.

The preferred arrangement for driving and positioning the profile cutter, with dual composite supports, has a high degree of rigidity and can provide very accurate positioning with high speeds. This can result in models with dimensional accuracy in the range from ± 0.1 to 0.2mm while the profile cutter is travelling at a speed of 750mm per second.

It is to be understood that various alterations additions and/or modifications may be incorporated into the parts previously described without departing from the ambit of the invention.

## Claims

1. Apparatus for forming a three-dimensional model from layers of a sheet material comprising:
(a) a profile cutter, for cutting shapes in the sheet material;
(b) a sheet material feeder, for positioning the sheet material prior to cutting by the profile cutter;
(c) a computer, providing instructions to the profile cutter conceming the shapes to be cut in the sheet material;
(d) a laminator, for laminating together successive layers of sheet material;
wherein the laminator includes a roller and a heating component and in operation the roller and heating component pass over the sheet material twice during each laminating step.

2. Apparatus according to claim 1 wherein the heating component comprises means for directing hot air against the sheet material.

3. Apparatus according to claim 2 wherein the means for directing hot air against the sheet material comprises an air source, an air heater and an array of air jets.

4. Apparatus for forming a three-dimensional model from layers of a sheet material comprising:
(a) a profile cutter, for cutting shapes in the sheet material;
(b) a sheet material feeder, for positioning the sheet material prior to cutting by the profile cutter;
(c) a computer, providing instructions to the profile cutter conceming the shapes to be cut in the sheet material;
(d) a laminator, for laminating together successive layers of sheet material;
wherein, prior to providing instructions to the profile cutter for any cutting operation, the computer analyses the shapes of cuts to be made, determines which areas of the sheet material are to form part of the model and which are to be discarded, so that each cut has a retain side and a discard side, and compensates for the width of the profile cutter by instructing the profile cutter to cut paths which are slightly on the discard side.

5. Apparatus according to claim 4 wherein identification of retain side and discard side for each cut proceeds by means of searching shapes from their outer most part to their centre, and identifying every second cut as an intemal profile and every other cut as an external profile.

6. Apparatus according to claim 4 wherein the laminator includes a roller and a heating component and in operation the roller and heating component pass over the sheet material twice during each laminating step.

7. Apparatus according to claim 1 or claim 4 wherein the profile cutter and the laminator are both controlled in their movement by means of the same two linear guides.

8. Apparatus according to claim 1 or claim 4 wherein the sheet material feeder includes tensioning rollers for applying a tension to the sheet material during lamination and cutting.
